Europäisches Patentamt

European Patent Office

Office européen des brevets

(19)

(11) Publication number: **0 019 461**
**B1**

(12) **EUROPEAN PATENT SPECIFICATION**

(45) Date of publication of patent specification: **23.02.83**

(51) Int. Cl.³: **B 24 D 3/00, B 23 B 27/14**

(21) Application number: **80301585.8**

(22) Date of filing: **15.05.80**

(54) Abrasive bodies.

(30) Priority: **16.05.79 ZA 792363**

(43) Date of publication of application:
**26.11.80 Bulletin 80/24**

(45) Publication of the grant of the patent:
**23.02.83 Bulletin 83/8**

(84) Designated Contracting States:
**BE CH DE FR GB IT LI NL**

(56) References cited:
**DE - A - 2 827 425**
**GB - A - 1 296 589**
**GB - A - 1 349 385**
**GB - A - 1 407 393**
**GB - A - 1 447 794**
**GB - A - 1 473 664**
**GB - A - 1 489 130**

**INDUSTRIE-ANZEIGER, Vol. 95, No. 108, 28
december 1973**
**H. TRACY HALL et al. "Megadiamond — ein
diamantharter, formbarer, vielseitig
verwendbarer Werkstoff" pages 2561 to 2563**

(73) Proprietor: **DE BEERS INDUSTRIAL DIAMOND
DIVISION (PROPRIETARY) LIMITED**
**8th Floor 45 Main Street**
**Johannesburg Transvaal (ZA)**

(72) Inventor: **Phaal, Cornelis**
**34, Rutland Avenue Craighall Park**
**Johannesburg Transvaal (ZA)**

(74) Representative: **Jones, Alan John et al,**
**CARPMAELS & RANSFORD 43 Bloomsbury
Square**
**London, WC1A 2RA (GB)**

(56) References cited:

**MACHINES PRODUCTION, No. 218, 13
December 1978**
**S. EKEMAR "Outils: Matériaux de coupe actuels
et de demain" pages 9 to 18**

Courier Press, Leamington Spa, England

Abrasive bodies

This invention relates to abrasive bodies and more particularly to abrasive bodies which contain abrasive compacts.

Abrasive compacts are known in the art. They consist essentially of a polycrystalline mass of abrasive particles, generally present in an amount of at least 70 percent, preferably 80 to 90 percent, by volume of the compact, bonded into a hard conglomerate. The abrasive particles of compacts are generally diamond or cubic boron nitride.

Abrasive compacts, particularly diamond and cubic boron nitride compacts, may be self bonded, i.e. individual particles of the compact may be fused and bonded together without the aid of a metal or like bonding matrix. Alternatively, stronger and more durable compacts are produced when there is a suitable bonding matrix present.

In the case of cubic boron nitride compacts, i.e. compacts in which the abrasive particle is predominantly cubic boron nitride, the bonding matrix, when provided, preferably contains a catalyst (also known as a solvent) for cubic boron nitride growth such as aluminium or an alloy of aluminium with nickel, cobalt, iron, manganese or chromium.

In the case of diamond compacts, i.e. compacts in which the abrasive particle is predominantly diamond, the bonding matrix, when provided, preferably contains a solvent for diamond growth. Suitable solvents are metals of Group VIII of the Periodic Table such as cobalt, nickel or iron or an alloy containing such a metal.

British Patent Specification No. 1,473,664 describes and claims a cutting tool insert, at least the cutting portion of which is formed as a sintered compact of polycrystalline diamond and/or cubic boron nitride and of, e.g. 0.020 inch (0.051 cm) thickness, the tool insert being formed substantially as a body of revolution, the circumference of which comprises a series of at least eight contiguous facets, the internal angle between each adjacent pair of facets being greater than 90° and less than 180°. The tool insert may comprise a substrate of, e.g. 0.100 inch (0.254 cm) thickness, consisting of, for example, tungsten carbide in a matrix of cobalt and carrying the cutting portion of sintered polycrystalline diamond and/or boron nitride alone or in a metal matrix. The tool insert is provided with a central hole for use in rotatably mounting the tool insert in a tool insert holder, whereby the tool insert may be indexed circumferentially around its axis relative to the tool insert holder, whereby different parts of the faceted surface may be brought into working position by indexing the tool insert.

According to the invention, there is provided an abrasive body comprising a support body of a high rigidity material which presents a major surface on each of opposite sides thereof and a thin continuous abrasive compact secured to the support body, the compact being in the form of a band and located in a recess which extends around the entire periphery of at least one of the major surfaces of the support body and presents an exposed continuous abrading surface or edge. The radial cross-section of the compact will generally be less than 10 square millimeters in area. When the compact is rectangular or substantially rectangular in radial cross-section, as will often be the case, the length and depth will each usually be no more than a few millimeters, e.g. each up to 4 millimeters.

The body as a whole may also be thin i.e. having a depth of up to 10 millimeters.

The support body may take a variety of shapes such as circular, triangular or rectangular in plan.

The support body, which is obviously made of a material other than abrasive compact, is made of a high rigidity material such as hard steel or cemented carbide. Examples of suitable hard steels are those of the M and T series. Any cemented carbide known in the art may be used such as cemented tantalum, molybdenum, titanium or tungsten carbide. Cemented carbides, as is known in the art, contain the carbide particles and a bonding phase which is usually a transition metal such as cobalt, nickel or iron.

The compact may be secured to the support body by means of brazing using any suitable braze known in the art. The compact may also be clamped to the support body. In this case, a plate which may be a metal plate will overlie a portion of the compact and will be secured to the support body. Securing of the plate to the support body may be achieved mechanically, e.g. nut and bolt, or by brazing.

The abrasive compact may be any known in the art, but is preferably a diamond or cubic boron nitride compact.

As inserted in the recess, the compact may be used on its own or it may be provided with a cemented carbide backing.

The abrasive body of the invention may be used for any abrading operation such as grinding, cutting, turning, drilling and the like. The bodies present a continuous, exposed cutting edge or surface of abrasive compact around the periphery. It is this edge or surface which does the abrading work. The use of expensive abrasive compact is thus reduced to a minimum. All that is required is a thin peripheral zone of compact, unlike abrasive bodies of the prior art which require entire discs or segments of compact. Furthermore, the fact that the compact extends around the entire periphery of the body means that there is a large abrading edge or surface. When a portion of the edge or surface wears during use, the body is simply rotated to present a fresh edge or surface.

The invention enables an abrasive compact, particularly when it has a disc shape, to be used to the full. For example, for disc shaped compacts, the compact may be fragmented into a number of concentric rings, each of which may be used in an abrasive body of the invention. Thus, from one such compact a plurality of abrasive bodies having a range of sizes may be produced. The production of a plurality of abrasive bodies having a range of sizes has particular application to cubic boron nitride compacts where large disc-shaped cubic boron nitride compacts can be produced commercially.

Embodiments of the invention will now be described with reference to Figures 1 to 4 of the accompanying drawing in which:

Figure 1 is a perspective view of an abrasive body,

Figure 2 is a section along the line 2—2 of Figure 1,

Figures 3 and 4 are each perspective views of further embodiments of abrasive bodies.

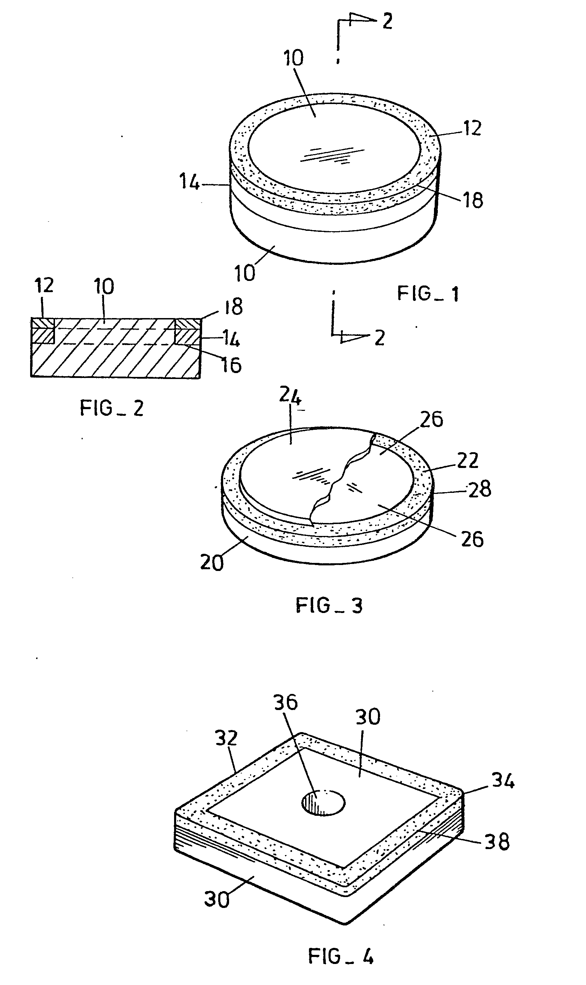

Referring to Figures 1 and 2 there is shown an abrasive body consisting of a circular disc 10 of cemented tungsten carbide and a thin ring of abrasive compact 12 bonded to a cemented carbide backing 14. The ring of abrasive compact and backing is located in a recess 16 formed in the disc 10. The compact and backing are firmly bonded to the cemented carbide by brazing.

The abrasive body may be used for a variety of abrading operations such as grinding, turning, cutting and drilling. It is the edges 18 of the compact which does the work.

Referring now to Figure 3, there is shown an abrasive body consisting of a support body 20 and a compact ring 22 located in a peripheral recess formed in the body. The compact ring 22 is secured to the support body by means of a clamping plate 24 which itself is secured to the top surface 26 of the body 20 by brazing. Such securing can, of course, also be achieved by other means such as mechanically. The exposed edge 28 of the compact ring does the work during abrading operations.

Referring to Figure 4, there is shown an abrasive body consisting of a support body 30 and an abrasive compact ring 32 located in a peripheral recess formed in the body. The compact ring is secured to the body by means of brazing. The body, as can be seen from Figure 4, is square in shape. It is the rounded edges 34 which usually do the abrading work in use. When one corner dulls, the body is rotated to present a fresh corner. The body is provided with a hole 36 by means of which it may be mounted for rotation. The longitudinal edge 38 is also available as an abrading edge.

## Claims

1. An abrasive body comprising a support body (10, 20, 30) of a high rigidity material to which is secured a thin abrasive compact (12, 22, 32), the abrasive compact presenting an exposed continuous abrading surface or edge (18, 28, 34, 38), characterized in that the compact is in the form of a band and is located in a recess (16) which extends around the entire periphery of at least one of the major surfaces (26) of the support body.

2. An abrasive body according to claim 1 characterized in that the support body (10, 20, 30) is circular, triangular or rectangular in plan.

3. An abrasive body according to claim 1 characterized in that the support body (10, 20, 30) is in the form of a disc.

4. An abrasive body according to any one of the preceding claims characterized in that compact (12, 22, 32) is rectangular in radial cross-section.

5. An abrasive body according to any one of the preceding claims characterized in that the radial cross-section of the compact (12, 22, 32) is less than 10 square millimeters in area.

6. An abrasive body according to any one of the preceding claims characterized in that the compact (12, 22, 32) is a cubic boron nitride compact.

7. An abrasive body according to any one of claims 1 to 5 characterized in that the compact (12, 22, 32) is a diamond compact.

8. An abrasive body according to any one of the preceding claims characterized in that the compact (12, 22, 32) is secured to the support body (10, 20, 30) by means of brazing.

9. An abrasive body according to any one of claims 1 to 7 characterized in that the compact (12, 22, 32) is secured to the support body (10, 20, 30) by means of a clamping plate (24) which overlies a portion of the compact and is bonded to the support body.

10. An abrasive body according to any one of the preceding claims characterized in that the support body (10, 20, 30) is made of hard steel or cemented carbide.

## Patentansprüche

1. Ein Schleifkörper mit einem Trägerkörper (10, 20, 30) aus hochfestem Material, an dem ein dünner Schleifverbundkörper (12, 22, 32) befestigt ist, der seinerseits eine freiliegende, durchgehende Schleiffläche oder -kante (18, 28, 34, 38) aufweist, dadurch gekennzeichnet, daß der Verbundkörper in Form eines Bandes vorliegt und in einer Aussparung (16) angeordnet ist, die sich um den gesamten Umfang wenigstens einer der Hauptflächen (26) des Trägerkörpers herumerstreckt.

2. Ein Schleifkörper nach Anspruch 1, dadurch gekennzeichnet, daß der Trägerkörper (10, 20, 30) im Grundriß kreisförmig, dreieckig oder rechteckig ist.

3. Ein Schleifkörper nach Anspruch 1, dadurch gekennzeichnet, daß der Trägerkörper (10, 20, 30) in Form eine Scheibe vorliegt.

4. Ein Schleifkörper nach einem der voranstehenden Ansprüche, dadurch gekennzeichnet, daß der Verbundkörper (12, 22, 32) im radialen Querschnitt rechteckig ist.

5. Ein Schleifkörper nach einem der voranstehenden Ansprüche, dadurch gekennzeichnet, daß der radiale Querschnitt des Verbundkörpers (12, 22, 32) in der Fläche kleiner als 10 mm² ist.

6. Ein Schleifkörper nach einem der voranstehenden Ansprüche, dadurch gekennzeichnet, daß der Verbundkörper (12, 22, 32) ein kubisches Bornitrid enthaltender Verbundkörper ist.

7. Ein Schleifkörper nach einem der Ansprüche 1 bis 5, dadurch gekennzeichnet, daß der Verbundkörper (12, 22, 32) ein Diamant enthaltender Verbundkörper ist.

8. Ein Schleifkörper nach einem der voranstehenden Ansprüche, dadurch gekennzeichnet, daß der Verbundkörper (12, 22, 32) am Trägerkörper (10, 20, 30) durch Löten befestigt ist.

9. Ein Schleifkörper nach einem der Ansprüche 1 bis 7, dadurch gekennzeichnet, daß der Verbundkörper (12, 22, 32) am Trägerkörper (10, 20, 30) durch eine Klemmplatte (24) befestigt ist, die einen Teil des Verbundkörpers überfängt und mit dem Trägerkörper verbunden ist.

10. Ein Schleifkörper nach einem der voranstehenden Ansprüche, dadurch gekennzeichnet, daß der Trägerkörper (10, 20, 30) aus Hartstahl oder Sinterkarbid gefertigt ist.

**Revendications**

1. Un corps abrasif comprenant un corps support (10, 20, 30) d'un matérieu de haute rigidité sur lequel est fixée une poudre compacte abrasive mince (12, 22, 32), le poudrier abrasif présentant une surface de brasage exposée, continue ou coin (18, 28, 38, 58), caractérisé en ce que la poudre compacte a la forme d'une bande et est localisée dans une encoche (16), qui s'étend autour de la périphérie entière d'au moins une des surfaces principales (26) du corps support.

2. Un corps abrasif selon la revendication 1, caractérisé en ce que le corps support (10, 20, 30) est circulaire, triangulaire ou rectangulaire dans le plan.

3. Un corps abrasif selon la revendication 1, caractérisé en ce que le corps support (10, 20, 30) a la forme d'un disque.

4. Un corps abrasif selon l'une quelconque des revendications précédentes, caractérisé en ce que la poudre compacte (12, 22, 32) a une section efficace radiale rectangulaire.

5. Un corps abrasif selon l'une quelconque des revendications précédentes, caractérise en ce que la section efficace radiale de la poudre compacte (12, 22, 32) a une dimension inférieure à 10 millimètres carrés.

6. Un corps abrasif selon l'une quelconque des revendications précédentes, caractérisé en ce que la poudre compacte (12, 22, 32) est une poudre compacte de nitrure de bore cubique.

7. Un corps abrasif selon l'une quelconque des revendications 1 à 5, caractérisé en ce que la poudre compacte (12, 22, 32) est une poudre compacte de diamant.

8. Un corps abrasif selon l'une quelconque des revendications précédentes, caractérisé en ce que la poudre compacte (12, 22, 32) est fixée au corps support (10, 20, 30) au moyen de brasage.

9. Un corps abrasif selon l'une des revendications 1 à 7, caractérisé en ce que la poudre compacte (12, 22, 32) est fixée au corps support (10, 20, 30) au moyen d'un serreplaque (24) qui couvre une portion de la poudre compacte et est lié au corps support.

10. Un corps abrasif selon l'une quelconque des revendications précédentes, caractérisé en ce que le corps support (10, 20, 30) est fabriqué avec un acier dur ou un carbure cémenté.

FIG_1

FIG_2

FIG_3

FIG_4